# EUROPEAN PATENT APPLICATION

(11) **EP 3 358 421 A1**
(43) Date of publication of application: **08.08.2018**
(21) Application number: 18152846.4
(22) Date of filing: 22.01.2018
(51) Int. Cl.: G03G 15/00, G03G 21/16, G06F 3/12, H04N 1/00

(54) **IMAGE FORMATION APPARATUS AND ALERT TRANSMISSION METHOD**

(30) Priority: 07.02.2017 JP 2017020585
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: KAMADA, Jin, Shinagawa-ku, Tokyo 141-8562 (JP)
(74) Representative: Takeuchi, Maya

(57) **Abstract**

In general, according to one embodiment, there is provided an image formation apparatus including a first sensor, a second sensor, a first transmission unit, and a second transmission unit. The first sensor detects a state of a first element. The second sensor detects a state of a second element. The first transmission unit transmits an alert in compliance with a first specification, to an external terminal, based on the state of the first element. The second transmission unit transmits an alert in compliance with a second specification different from the first specification to the external terminal, based on the state of the second element.

## Description

### FIELD

The present invention relates to the field of image processing technologies in general, and embodiments described herein relate in particular to a technology in which an image formation apparatus transmits an alert.

### BACKGROUND

In the related art, in a system that manages an image formation apparatus, the image formation apparatus generates an alert when an error is detected, and sequentially transmits non-transmission alerts to a management apparatus. Each alert is generated in compliance with a prescribed specification, and is one record that includes a plurality of pieces of attribute information.

If an error that is indicated by a non-transmission alert that is retained is canceled, the image formation apparatus cancels the alert. For example, if a non-transmission alert indicating an error, that is, a state where a cover is opened, is retained, the image formation apparatus cancels the alert when the cover is closed.

However, when an error that is indicated by an alert of which transmission is in progress is canceled while transmission of the alert is in progress, the image formation apparatus transmits insufficient attribute information in a record for the alert of which the transmission is in progress, using attribute information that corresponds to the immediately following alert. Then, the image formation apparatus transmits an alert that comes after the immediately following alert. That is, in the related art, when the error that is indicated by the alert of which the transmission is in progress is canceled, there occurs a problem that the image formation apparatus transmits the alert and the following alert, pieces of attribute information on which are mixed with one another. Furthermore, there occurs a problem that the image formation apparatus cannot transmit the immediately-following alert, regardless of the fact that the immediately-following alert is not canceled.

To solve such problem, there is provided an image formation apparatus comprising:
a first sensor that detects a state of a first element;
a second sensor that detects a state of a second element;
a first transmission unit configured to transmit an alert in compliance with a first specification to an external terminal, based on the state of the first element; and
a second transmission unit configured to transmit an alert in compliance with a second specification which is different from the first specification, to the external terminal, based on the state of the second element.

Preferably, the second transmission unit is a communication terminal that operates independently of the first transmission unit.

Preferably still, the first transmission unit generates the alert that includes a plurality of pieces of attribute information, based on the state of the first element, transmits non-transmission alerts sequentially, and, when transmitting an alert, sequentially transmits pieces of attribute information on the alert.

Preferably yet, the first transmission unit determines whether or the state of the first element is an error, based on the state of the first element, and, if it is determined that the state of the first element is the error, generates the alert, and the second transmission unit transmits the state of the second element as the alert.

Suitably, the second sensor transmits the state of the second element to the first transmission unit and the second transmission unit, and the first transmission unit determines whether or not the state of the second element is an error, based on an output signal of the second sensor, and, if it is determined that the state of the second element is the error, invalidates the alert after the alert is generated.

Suitably still, the state of the second element is an opened or closed state of a cover of the image formation apparatus.

Suitably yet, the alert in compliance with the first specification indicates that the state of the first element is an error, if it is determined that the state of the first element is the error.

Typically, the second transmission unit is configured to operate independently of the first transmission unit.

Additionally, the invention also relates to an alert transmission method that is performed by an image formation apparatus that includes a first sensor that detects a state of a first element and a second sensor that detects a state of a second element, the method comprising steps of:
transmitting an alert in compliance with a first specification to an external terminal, based on the state of the first element; and
transmitting an alert in compliance with a second specification that is different from the first specification, to the external terminal, based on the state of the second element.

Preferably, the alert transmission method further comprises steps of:
determining whether or not the state of the first element is an error, based on the state of the first element; and
generating the alert and transmitting the state of the second element as the alert, if it is determined that the state of the first element is the error.

Preferably still, the alert transmission method further comprises steps of:
determining whether or not the state of the second element is an error, based on output signal of the second sensor; and
   invalidating the generated alert, if it is determined that the state of the second element is the error.

Preferably yet, the state of the second element is an opened or closed state of a cover of the image formation apparatus in the alert transmission method.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a configuration of an alert management system.
FIG. 2 is a flowchart illustrating the transmitting of an alert by a processor.
FIG. 3 is a diagram illustrating an alert table.
FIG. 4 is a diagram illustrating an alert that is generated if the alert is canceled.
FIG. 5 is a diagram illustrating an alert table that results after invalidation.
FIG. 6 is a flowchart illustrating the transmission of a detection signal of a sensor by a communication terminal.

### DETAILED DESCRIPTION

In general, according to one embodiment, there is provided an image formation apparatus including a first sensor, a second sensor, a first transmission unit, and a second transmission unit. The first sensor detects a state of a first element. The second sensor detects a state of a second element. The first transmission unit transmits an alert in compliance with a first specification to an external terminal, based on the state of the first element. The second transmission unit transmits an alert in compliance with a second specification different from the first specification to the external terminal, based on the state of the second element.

In general, according to another embodiment, there is provided an image formation apparatus including a first sensor, a second sensor, a first transmission unit, and a second transmission unit. The first sensor detects a state of a first element. The second sensor detects a state of a second element. If, based on the state of the first element, it is determined that the state of the first element is an error, the first transmission unit transmits to an external terminal an alert indicating that the state of the first element is the error. The second transmission unit transmits the state of the second element to the external terminal, and operates independently of the first transmission unit.

In general, according to still another embodiment, there is provided an alert transmission method that is performed by an image formation apparatus that includes a first sensor that detects a state of a first element and a second sensor that detects a state of a second element, the method including transmitting an alert in compliance with a first specification to an external terminal, based on the state of the first element, and transmitting an alert in compliance with a second specification that is different from the first specification, to the external terminal, based on the state of the second element.

An embodiment will be described below with reference to the drawings.

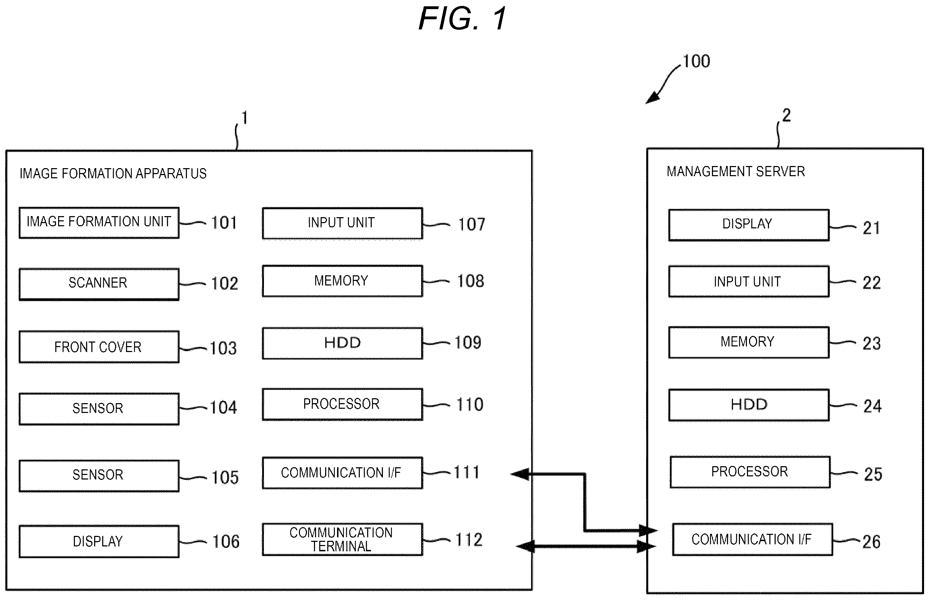

FIG. 1 is a diagram illustrating a configuration of an alert management system 100.

The alert management system 100 includes an image formation apparatus 1 and a management server 2.

The image formation apparatus 1 is a multi-function peripheral (MFP) that has a plurality of functions, such as coping, printing, scanning, faxing, and email transmitting. Only one image formation apparatus 1 is illustrated in FIG. 1. However, a plurality of image formation apparatuses 1 may communicate with the management server 2, and may be monitored by the management server 2.

The image formation apparatus 1 includes an image formation unit 101, a scanner 102, a front cover 103, sensors 104 and 105, a display 106, an input unit 107, a memory 108, aharddiskdrive (HDD) 109, a processor 110 (a first transmission unit), a communication interface (I/F) 111, and a communication terminal 112 (a second transmission unit).

The image formation unit 101 forms an image on a sheet. The image formation unit 101 forms a latent image on a photo-sensitive body using a laser, develops the latent image using a toner, forms a toner image, and transfers the toner image from the photo-sensitive body to the sheet. The image formation unit 101 may inject ink from a head and may form the image on the sheet.

The scanner 102 captures the image on the sheet using an imaging element.

The front cover 103 is one portion of a case of the image formation apparatus 1, and for example, covers a front surface of an area where the image formation unit 101 is installed. The front cover 103 connects to the case using a hinge in a manner that allows the front cover 103 to be opened and closed. The front cover 103 is opened before being able to replace a toner cartridge or the like of the image formation unit 101 or to perform maintenance and inspection.

The sensor 104 detects a state where the front cover 103 is opened and a state where the front cover 103 is closed (the state of the second element). The sensor 104 outputs a detection signal indicating the opened or closed state of the front cover 103 to the communication terminal 112 and the processor 110.

The sensor 105 detects whether or not the toner cartridge is installed in a reference position (the state of the first element).

The sensors 104 and 105 are illustrated as examples. The sensors 104 and 105 are present within each unit within the image formation apparatus 1 and detect a state of each element. As another example of the sensors 104 and 105, there is a sensor that detects the presence and absence of a sheet (sheet jamming) on a transportation path. Furthermore, as an example of the sensors 104 and 105, there is a sensor that detects a temperature of a fixing unit which heats a sheet that passes through the photo-sensitive body.

An image is displayed on the display 106. The input unit 107 is a touch panel, or the like, and receives a user's input. A program, a setting value, and the like are stored in the memory 108. Image data that results from the scanning by the scanner 102 is stored in the HDD 109.

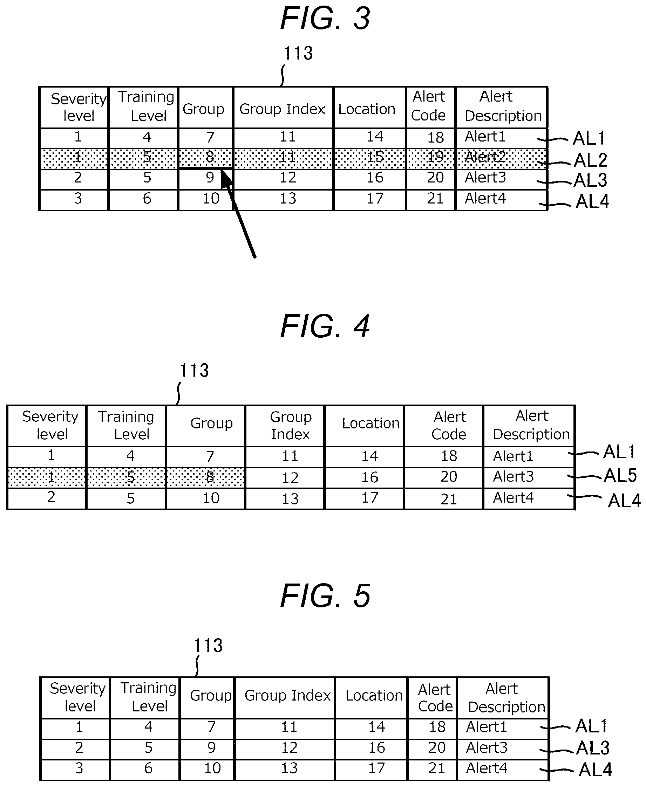

The processor 110 controls the entire image formation apparatus 1. The processor 110 reads the program within the memory 108, and thus performs various functions of the image formation apparatus 1, such as a function of sending alerts AL 1 to 4 (FIG. 5) indicating an abnormality of the sensor 105 to the management server 2.

The communication I/F 111 enables the processor 110 to connect to the management server 2. The communication I/F 111 connects to the management server 2 on a network in a wired or wireless manner.

The management server 2 includes a display 21, an input unit22, a memory 23, anHDD24, a processor 25, and a communication I/F 26. An image is displayed on the display 21. The input unit 22 is a keyboard or the like, and receives a user's input. A program, a setting value, and the like are stored in the memory 23. The processor 25 controls the entire management server 2. The processor 25 reads a program within the memory 23, and thus performs various functions of the management server 2.

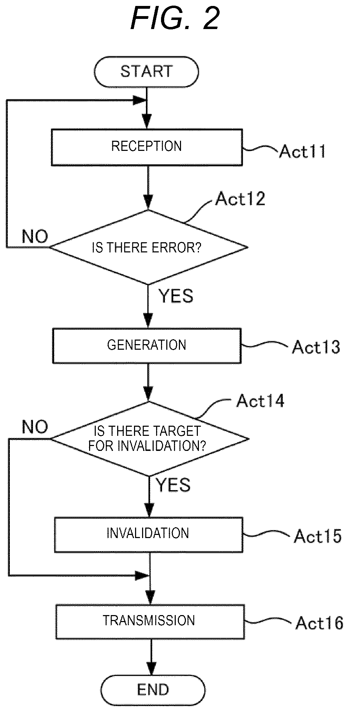

The transmitting of the alerts AL1 to AL4 by the processor 110 will be described below with reference to a flowchart in FIG. 2.

The processor 110 receives the detection signals from the sensors 104 and 105 (Act 11).

The processor 110 determines the presence and absence of an error based on the sensors 104 and 105 (Act 12). For example, if the detection signal of the sensor 104 indicates the state where the front cover 103 is opened, the processor 110 determines that a state of the front cover 103 is an error (YES in Act 12). If the state where the front cover 103 is closed is indicated, the processor 110 determines that the state of the front cover 103 is normal (NO in Act 12). For example, if the detection signal of the sensor 105 indicates a state where the toner cartridge is not installed in the reference position, the processor 110 determines that a state of the toner cartridge is an error (YES in Act 12). If a state where the toner cartridge is installed in the reference position is indicated, the processor 110 determines that the state of the toner cartridge is normal (NO in Act 12).

FIG. 3 is a diagram illustrating an alert table 113.

If it is determined that a result is an error (YES in Act 12), the processor 110 generates the alerts AL1 to AL4 (Act 13). The processor 110 generates the alerts AL1 to AL4, in compliance with specifications for a management information base (MIB) and a simple network management protocol (SNMP). Furthermore, the processor 110 transmits the alerts AL1 to AL4 to the management server 2 using a trap command and a snmpwalk command. The trap command enables the processor 110 to voluntarily transmit the alerts AL1 to AL4 to the management server 2. The snmpwalk command enables the processor 110 to receive Getrequest from the management server 2 and to respond with the alerts AL1 to AL4.

Each of the alerts AL1 to AL4 is pieces of data that are arranged in one row in FIG. 3, and is a record that includes a plurality of pieces of attribute information. According to the present embodiment, the attribute information is Severity level, Training Level, Group, Group Index, Location, Alert Code, or Alert Description.

The non-transmission alerts AL1 to AL4 are sequentially set to be in the alert table 113 within the memory 108 in the order in which the alerts AL1 to AL4 are generated. The alerts AL1 to AL4 are assumed to be set in the alert table 113 in FIG. 3, starting from the first row. According to the embodiment, there are four alerts AL1 to AL4 in the alert table 113, and the alert AL 2 in the second row that is highlighted by dots indicates an error, that is, the state where the front cover 103 is opened.

When transmitting the alerts AL1 to AL4 in the alert table 113, the processor 110 transmits the alerts AL1 to AL4 in the order in which the alerts AL1 to AL4 are generated. According to the present embodiment, the processor 110 transmits pieces of attribute information on an alert in this order: Severity level, Training Level, Group, Group Index, Location, Alert Code, Alert Description.

When the error is canceled, although the transmission of the alerts AL1 to AL4 is in progress, the processor 110 cancels the alerts AL1 to AL4 indicating the error. There is an error that, according to a type of error, is easy to cancel while the transmission of the alerts AL1 to AL4 is in progress. For example, a user tends to open and close the front cover 103. According to the present embodiment, Alert Description of the alert AL2 is assumed to indicate an error (Alert 2) indicating the state where the front cover 103 is opened. That is, the alert AL2 is assumed to be a type of alert that is easy to cancel while the transmission thereof is in progress.

In the related art, if pieces of attribute information up to and including Group, that is, attribute information that is indicated by an arrow in the alert AL2 are transmitted, when it is detected that the front cover 103 is closed, the processor 110 cancels the alert AL2.

FIG. 4 is a diagram illustrating an alert AL5 that is generated if the alert AL2 is canceled.

In this case, among pieces of attribute information that constitute each of the records for the alerts AL1 to AL4, the processor 110 in the related art uses attribute information on the alert AL3 that immediately follows the canceled alert AL2, as the non-transmission attribute information. According to the present embodiment, the processor 110 uses the attribute information on the alert AL3, as pieces of attribute information, that is, Group, Index, Location, Alert Code, and Alert Description.

Therefore, the processor 110 transmits the alert AL5, which includes some of the pieces of attribute information on the alert AL2, that is, Severity level, Training Level, and Group, and some of the pieces of attribute information on the alert AL3, that is, Group Index, Location, Alert Code, and Alert Description, to the management server 2.

In this manner, there occurs a problem that, when the alerts AL1 to AL4 are canceled while the transmission of the alerts AL1 to AL4 is in progress, the processor 110 transmits the unsuitable alert AL5 to the management server 2. Furthermore, there occurs a problem that, regardless of the fact that the alert AL3 is not canceled, the processor 110 cannot transmit the alert AL3 to the management server 2.

Accordingly, according to the present embodiment, each error that is easy to cancel while the transmission of the alerts AL1 to AL4 is in progress is set in advance, as a target for invalidation, to be in the memory 108. According to the present embodiment, the error (the Alert 2) in Alert Description, which indicates that the front cover 103 is opened, is set as the target for the invalidation.

FIG. 5 is a diagram illustrating the alert table 113 that results after the invalidation.

Among the alerts AL1 to AL4 in the alert table 113, if there is the alert AL2 indicating an error that is the target for the invalidation (YES in Act 14), the processor 110 invalidates the alert AL2. According to the present embodiment, if in the alert table 113, there is the alert AL2 indicating the error (the Alert 2), that is, the state where the front cover 103 is opened, the processor 110 invalidates the alert AL2 (Act 15). Accordingly, the alert AL2 is deleted from the alert table 113. If in the alert table 113, there is no alert AL2 indicating the error (the Alert 2) that is the target for the invalidation (NO in Act 14), the processor 110 performs Act 16 that follows.

The processor 110 sequentially transmits the alerts AL1, AL3, and AL4 in the alert table 113, to the management server 2 (Act 16).

In this manner, based on the state of the first element (for example, an installed state of the toner cartridge) that is detected by the sensor 105, the processor 110 transmits the alerts AL1, AL3, and AL4 in compliance with the first specification to the management server 2. The first specification is in accordance with the MIB and SNMP specifications. In compliance with the first specification, each of the alerts AL1, AL3, and AL4 is configured with a record including the pieces of attribute information, that is, Severity level, Training Level, Group, Group Index, Location, Alert Code, and Alert Description.

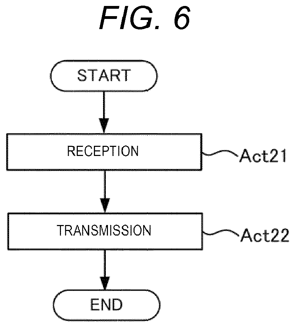

The transmitting of the detection signal of the sensor 104 by the communication terminal 112 will be described with reference to a flowchart in FIG. 6.

The communication terminal 112 is a so-called IoT communication module. The communication terminal 112 is provided in the vicinity of the sensor 104 for detecting the error that is the target for the invalidation, and is connected to the sensor 104. The communication terminal 112 operates independently of the processor 110.

The communication terminal 112 receives the detection signal of the sensor 104 (Act 21).

The communication terminal 112 transmits the detection signal of the sensor 104 to the management server 2 (Act 22). For example, whenever the sensor 104 detects switching between the opened and closed states of the front cover 103, the communication terminal 112 transmits the opened or closed state of the front cover 103 to the management server 2. If the management server 2 supports the Internet Protocol Version 6 (IPv6), the communication terminal 112 communicates with the management server 2 in compliance with the IPv6. If the management server 2 supports only the Internet Protocol Version 4 (IPv4), the communication terminal 112 communicates with the management server 2 through a router that mediates between the IPv6 and the IPv4.

Based on the state (for example, the opened or closed state of the front cover 103) of the second element that is detected by the sensor 104, the communication terminal 112 transmits the alert in compliance with the second specification to the management server 2. The alert here is assumed to refer to a signal that can detect an error based on the alert. The alert, for example, refers to the opened or closed state of the front cover 103. The second specification refers to a specification that is different from the specification, in compliance of which the alerts AL1, AL3, and AL4 are generated by the processor 110.

The communication terminal 112 is connected to the sensor 104 that is suitable for detecting the state of the second element, which is easy to cancel while the transmission of the alert is in progress, and transmits the detection signal of the sensor 104, which indicates the state of the second element, to the management server 2.

The communication terminal 112 may generate information indicating the state where the front cover 103 is opened, as the alert in compliance with the second specification, and may transmit the generated information to the management server 2. The communication terminal 112 may transmit the alert to the management server 2, via mail. The communication terminal 112 may transmit the alert to the management server 2 in a wired or wireless manner.

The communication terminal 112 can be installed within the image formation apparatus 1, in order to transmit the detection signal of the sensor 104, which is present in the related art, to the management server 2. The communication terminal 112 may be integrally combined with the sensor 104 for installation, and, along with the sensor 104, may be built in a module.

In a state where a power supply is connected to the image formation apparatus 1, even though a power switch is pushed down and thus the image formation apparatus 1 is powered off, power is supplied from the power supply to the communication terminal 112. Therefore, if the sensor 104 is integrally built in a module along with the communication terminal 112, even though the image formation apparatus 1 is powered off, the sensor 104 can detect the opened or closed state of the front cover 103, and the communication terminal 112 can transmit the opened or closed state of the front cover 103 to the management server 2.

The management server 2 monitors the image formation apparatus 1, based on the alerts AL1, AL3, and AL4 that are received from the processor 110, and the alert (the state of the element of the image formation apparatus 1) that is received from the communication terminal 112. When receiving the alerts AL1, AL3, and AL4 from the processor 110 and the communication terminal 112, the management server 2 may display details of the alerts AL1, AL3, and AL4 on the display 21 or on a screen of a PC or a mobile device that belongs to an administrator, and may turn in or on a light, thereby alerting the administrator to the alerts AL1, AL3, and AL4.

According to the present embodiment, the communication terminal 112 is connected to the sensor 104 that detects an error that is very likely to be canceled while the transmission of the alerts AL1, AL3, and AL4 is in progress. Then, the communication terminal 112 transmits the signal (or the alert) that is detected by the sensor 104, to the management server 2.

Therefore, according to the present embodiment, although an error is canceled while the transmission of the alerts AL1, AL3, and AL4 by the processor 110 is in progress, the error is not involved in the alerts AL1, AL3, and AL4 that are transmitted by the processor 110. For this reason, the alerts AL1, AL3, and AL4, which are transmitted by the processor 110, can be prevented from being mixed with one another, and the alerts AL1, AL3, and AL4 can be suitably transmitted. Furthermore, because the communication terminal 112 bears the burden of one portion of the transmission of the alert, a load on the processor 110 can be reduced.

A technology that enables the image formation apparatus to suitably transmit the alert when the error is canceled can be provided as long as the technology is the same as described above in this specification.

While certain embodiments have been described, these embodiments have been presented by way of example only, and are not intended to limit the scope of invention. Indeed, the novel apparatus, methods and system described herein may be embodied in a variety of other forms; furthermore, various omissions, substitutions and changes in the formof the apparatus, methods and systemdescribedhereinmaybe made without departing from the scope of the inventions. The accompanying claims and their equivalents are intended to cover such forms or modifications as would fall within the scope of the inventions.

## Claims

1. An image formation apparatus comprising:
a first sensor that detects a state of a first element;
a second sensor that detects a state of a second element;
a first transmission unit configured to transmit an alert in compliance with a first specification to an external terminal, based on the state of the first element; and
a second transmission unit configured to transmit an alert in compliance with a second specification which is different from the first specification, to the external terminal, based on the state of the second element.

2. The image formation apparatus according to claim 1,
wherein the second transmission unit is a communication terminal that operates independently of the first transmission unit.

3. The image formation apparatus according to claims 1 or 2,
wherein the first transmission unit generates the alert that includes a plurality of pieces of attribute information, based on the state of the first element, transmits non-transmission alerts sequentially, and, when transmitting an alert, sequentially transmits pieces of attribute information on the alert.

4. The image formation apparatus according to any one of claims 1 to 3,
wherein the first transmission unit determines whether or the state of the first element is an error, based on the state of the first element, and, if it is determined that the state of the first element is the error, generates the alert, and
wherein the second transmission unit transmits the state of the second element as the alert.

5. The image formation apparatus according to any one of claims 1 to 4,
wherein the second sensor transmits the state of the second element to the first transmission unit and the second transmission unit, and
wherein the first transmission unit determines whether or not the state of the second element is an error, based on an output signal of the second sensor, and, if it is determined that the state of the second element is the error, invalidates the alert after the alert is generated.

6. The image formation apparatus according to any one of claims 1 to 5,
wherein the state of the second element is an opened or closed state of a cover of the image formation apparatus.

7. The image formation apparatus according to any one of claims 1 to 6, wherein
the alert in compliance with the first specification indicates that the state of the first element is an error, if it is determined that the state of the first element is the error.

8. The image formation apparatus according to any one of claims 1 to 7, wherein
the second transmission unit is configured to operate independently of the first transmission unit.

9. An alert transmission method that is performed by an image formation apparatus that includes a first sensor that detects a state of a first element and a second sensor that detects a state of a second element, the method comprising steps of:
transmitting an alert in compliance with a first specification to an external terminal, based on the state of the first element; and
transmitting an alert in compliance with a second specification that is different from the first specification, to the external terminal, based on the state of the second element.

10. The alert transmission method according to claim 9, further comprising steps of:
determining whether or not the state of the first element is an error, based on the state of the first element; and
generating the alert and transmitting the state of the second element as the alert, if it is determined that the state of the first element is the error.

11. The alert transmission method according to claims 9 or 10, further comprising steps of:
determining whether or not the state of the second element is an error, based on output signal of the second sensor; and
invalidating the generated alert, if it is determined that the state of the second element is the error.

12. The alert transmission method according to any one of claims 9 to 11,
wherein the state of the second element is an opened or closed state of a cover of the image formation apparatus.
